# EUROPEAN PATENT APPLICATION

(11) **EP 3 321 236 A1**
(43) Date of publication of application: **16.05.2018**
(21) Application number: 17200808.8
(22) Date of filing: 09.11.2017
(51) Int. Cl.: C03B 19/01, C03B 19/06, B33Y 10/00

(54) **POWDER BED ADDITIVE MANUFACTURING OF LOW EXPANSION GLASS**

(30) Priority: 10.11.2016 US 201615348194
(71) Applicant: Goodrich Corporation, Charlotte, NC 28217-4578 (US)
(72) Inventor: HARRISON, Kramer, Norwalk, CT Connecticut 06854 (US); EAST, Matthew J., Danbury, CT Connecticut 06811 (US); DUNN, Daniel E., Bethel, CT Connecticut 06801 (US); SOUTHARD, Bari M., Bridgewater, CT Connecticut 06752 (US)
(74) Representative: Hughes, Andrea Michelle

(57) **Abstract**

A method of forming an optical component, e.g. a mirror substrate, includes fusing glass powder material, e.g. low expansion glass material, to a facesheet (104) to form a first core material layer (106) on the facesheet. The method also includes successively fusing glass powder material in a plurality of additional core material layers (108) to build a core material structure on the facesheet. The method can include positioning the facesheet on a mandrel (102) prior to fusing glass powder material to the facesheet. Fusing glass powder material to the facesheet can include fusing the glass powder material to a polishable surface of the facesheet.

## Description

### BACKGROUND OF THE INVENTION

### 1. Field of the Invention

The present disclosure relates to optics and additive manufacturing, and more particularly to additively manufacturing optics e.g., from low expansion glass.

### 2. Description of Related Art

Conventional lightweight glass mirror substrates are generated with subtractive manufacturing, milling, grinding, polishing, or etching away material from a large glass boule. These processes can create a stiff, lightweight glass structure with a precisely shaped optical surface, which remains stable under thermal and mechanical loads. But because glass is fragile, it is challenging to manufacture many small, intricate features with these conventional processes, and such intricate features can be important to manufacturing lightweight optics.

The conventional techniques have been considered satisfactory for their intended purpose. However, there is an ever present need for improved manufacturing of glass optics such as mirror substrates. This disclosure provides a solution for this problem.

### SUMMARY OF THE INVENTION

A method of forming an optical component includes fusing glass powder material to a facesheet to form a first core material layer on the facesheet. The method also includes successively fusing glass powder material in a plurality of additional core material layers to build a core material structure on the facesheet.

The method can include positioning the facesheet on a mandrel prior to fusing glass powder material to the facesheet. Fusing glass powder material to the facesheet can include fusing the glass powder material to a side of the facesheet opposing a polishable surface of the facesheet.

At least one of fusing glass powder to form the first core material layer and successively fusing glass powder material in a plurality of additional core material layers can include:
depositing powder over at least one of the facesheet, the first core material layer, and/or the one of the additional core material layers; and
selectively fusing only a portion of the powder.

Depositing powder can include depositing powder over an entire assembly of the facesheet and any subsequently layers of glass subsequently fused thereto. Fusing glass powder material can include fusing low expansion glass powder into low expansion glass. Fusing glass powder material can include fusing low expansion titania-silica glass powder into low expansion titania-silica glass. Fusing glass powder material to a facesheet can include fusing glass powder material to a facesheet that is contoured for optical properties.

Successively fusing glass powder material can include forming a mirror substrate. Forming a mirror substrate can include forming an optimal three-dimensional mirror topology that minimizes the mass of mirror substrate while providing a level of stiffness and stability above a predetermined minimum requirement. Successively fusing glass powder material can include varying material properties in successive layers and/or varying material properties based on position in the successive layers.

An optical component includes a glass facesheet. A first layer of low expansion glass is fused to the glass facesheet. A plurality of successively fused layers form a core material structure on an assembly that includes the facesheet and the first layer.

The facesheet can be contoured for optical properties. A front side of the facesheet can include a polishable surface. The first layer can be fused to a side of the facesheet opposite the polishable surface of the facesheet. The first layer and the plurality of successively fused layers can include fused low expansion glass powder material, e.g., low expansion titania-silica glass powder. The facesheet, first layer, and successively fused layers can form a mirror substrate. The mirror substrate can include an optimal three-dimensional mirror topology that minimizes the mass of mirror substrate while providing a level of stiffness and stability above a predetermined minimum requirement. The plurality of successively fused layers can include glass material with material properties that vary in successive layers and or that vary based on position within the core material structure.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic side elevation view of an exemplary embodiment of a mirror substrate constructed in accordance with the present disclosure, showing the mandrel and the facesheet with successive layers of additively manufactured core material structure deposited on the facesheet; and
Fig. 2 is a schematic plan view of the mirror substrate of Fig. 1, showing a laser beam selectively fusing a portion of the powder material.

### DETAILED DESCRIPTION OF THE PREFERRED EMBODIMENTS

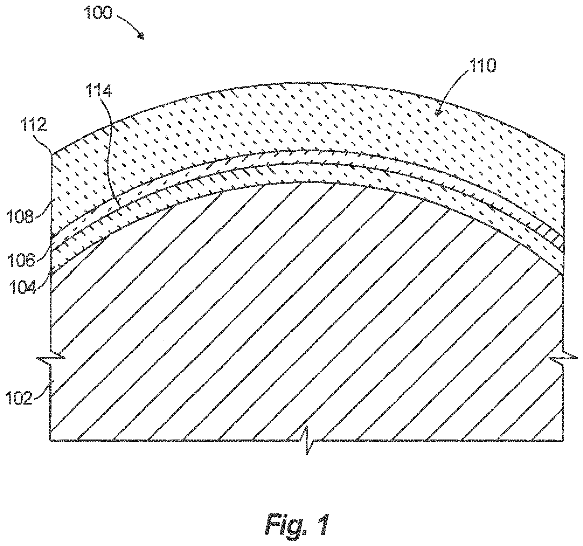

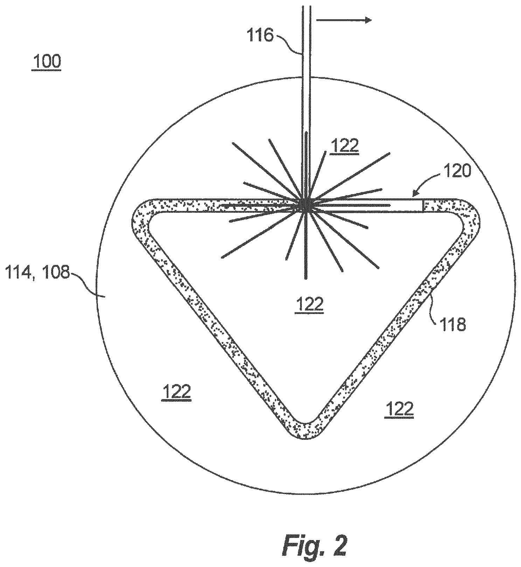

Reference will now be made to the drawings wherein like reference numerals identify similar structural features or aspects of the subject disclosure. For purposes of explanation and illustration, and not limitation, a partial view of an exemplary embodiment of an optical component in accordance with the disclosure is shown in Fig. 1 and is designated generally by reference character 100. Other embodiments of optical components in accordance with the disclosure, or aspects thereof, are provided in Fig. 2, as will be described. The systems and methods described herein can be used to additively manufacture light-weidth mirror substrates from low thermal expansion glass.

Fig. 1 shows an optical component 100, e.g., a mirror substrate, on a mandrel 102. A method of forming the optical component 100 includes positioning a preformed glass facesheet 104 on the mandrel 102. The facesheet 104 can be made of titania-silica glass, can be relatively thin, and is contoured for optical properties, e.g. to provide a desired or predetermined mirror contour. A glass powder material is fused to a polishable surface 114 of the facesheet 104 to form a first core material layer 106 on the facesheet 104. Glass powder material is then successively fused in a plurality of additional core material layers 108 to build a core material structure 110 on the facesheet 104. The final layer 112 is fused at the surface of core material structure 110 opposite the facesheet 104 from the first layer 106. The facesheet 104 becomes part of the finished optical component 100.

Referring now to Fig. 2, during the additive manufacture, powder for each successive layer 108 can be deposited on the entire top surface as oriented in Fig. 1, in other words the surface where laser fusing occurs, of the assembly 115 that includes the facesheet 104, the first core material layer 106, and/or one or more of the additional core material layers 108. This powder can be deposited in a thin film by any other suitable technique, and does not have to be selectively deposited. The glass powder material can be configured to form a low expansion glass material when the powder is fused, for example, low expansion titania-silica glass powder can be fused into low expansion titania-silica glass.

Each such layer of powder is fused either in its entirety or can be only selectively fused so that only a portion of the powder is actually fused to the assembly 115 to form the cross-section of the desired geometry into the core material structure 110. The fusion can be achieved by using a laser beam, e.g., of a CO₂ laser, however any suitable type of laser can be used. In Fig. 2, laser beam 116 is shown schematically fusing the portion 118 of the deposited powder covering assembly 115 to form a layer of fused glass only in the triangle shape shown. The direction of movement of laser beam 116 around the pattern of the triangle is indicated by the large arrow in Fig. 2. The portion 120 of the powder that is about to be fused by laser beam 116 is shown schematically in Fig. 2. This technique allows for forming a mirror substrate, or other optical component, with an optimal three-dimensional topology that minimizes the mass of mirror substrate while providing a level of stiffness and stability above a predetermined minimum requirement. Successively fusing layers as described herein can include fusing glass powder material so as to vary material properties in successive layers and/or varying material properties based on position in a given layer. For example, the triangular portion 118 in Fig. 2 can be formed of glass with a first set of material properties, and the remaining portions 122 of the surface of assembly 115 can be formed of a glass with a second set of material properties so that a given layer 108 has different sets of material properties within itself as a function of location within that layer 108.

Unlike conventional additive manufacturing, where a part is printed on a build plate and later removed therefrom, the facesheet 104 serves as a build plate and also becomes part of the finished product. As a finishing process, the front surface of facesheet 104 shown in Fig. 1, i.e., the surface of facesheet 104 opposite layers 108, can be polished and coated.

The methods and systems of the present disclosure, as described above and shown in the drawings, provide for optical components with superior properties potentially including very intricate features, optimal three-dimensional geometric topologies, including amorphous topologies with smaller more intricate features than in conventional techniques, to minimize mass, e.g., of mirror substrates, while achieving required stiffness and stability for given applications and loads. It is also possible to provide quicker fabrication of low expansion glass using techniques disclosed herein, compared to conventional techniques, and it is possible to make larger glass mirror substrates than in convention techniques. With respect to allowing making larger glass mirror substrates than in conventional techniques using build plates, this stems from the fact that under conventional techniques, the high temperatures of additive manufacturing can case thermal stresses during manufacture that warp a part and can cause it to peel off from the build-plate. This peeling process limits how large a component can be manufactured under conventional techniques, but it is not a limitation for techniques disclosed herein.

While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A method of forming an optical component (100) comprising:
fusing glass powder material to a facesheet (104) to form a first core material layer (106) on the facesheet; and
successively fusing glass powder material in a plurality of additional core material layers (108) to build a core material structure (110) on the facesheet.

2. The method as recited in claim 1, wherein at least one of fusing glass powder to form the first core material layer and successively fusing glass powder material in a plurality of additional core material layers includes:
depositing powder over at least one of the facesheet, the first core material layer, and/or the one of the additional core material layers; and
selectively fusing only a portion of the powder.

3. The method as recited in claim 1 or 2, wherein depositing powder includes depositing powder over an entire assembly of the facesheet and any subsequently layers of glass subsequently fused thereto.

4. The method as recited in claim 1, 2 or 3, wherein fusing glass powder material includes fusing low expansion glass powder into low expansion glass.

5. The method as recited in any preceding claim, wherein fusing glass powder material includes fusing low expansion titania-silica glass powder into low expansion titania-silica glass.

6. The method as recited in any preceding claim, wherein fusing glass powder material to a facesheet includes fusing glass powder material to a facesheet that is contoured for optical properties.

7. The method as recited in any preceding claim, further comprising positioning the facesheet on a mandrel (102) prior to fusing glass powder material to the facesheet.

8. The method as recited in any preceding claim, wherein fusing glass powder material to the facesheet includes fusing the glass powder material to a side of the facesheet opposing a polishable surface of the facesheet.

9. The method as recited in claim 1, wherein successively fusing glass powder material includes forming a mirror substrate.

10. The method as recited in claim 9, wherein forming a mirror substrate includes forming an optimal three-dimensional mirror topology that minimizes the mass of mirror substrate while providing a level of stiffness and stability above a predetermined minimum requirement.

11. The method as recited in any preceding claim, wherein successively fusing glass powder material includes varying material properties in successive layers.
